Europäisches Patentamt

European Patent Office

Office européen des brevets

(11) Veröffentlichungsnummer: **0 374 381**

**A2**

(12) **EUROPÄISCHE PATENTANMELDUNG**

(21) Anmeldenummer: 89117446.8

(51) Int. Cl.⁵: **F16C 13/00**

(22) Anmeldetag: 21.09.89

(30) Priorität: 23.12.88 DE 3843434

(43) Veröffentlichungstag der Anmeldung:
27.06.90 Patentblatt 90/26

(84) Benannte Vertragsstaaten:
FR GB IT

(71) Anmelder: **Eduard Küsters Maschinenfabrik GmbH & Co. KG**
**Gladbacher Strasse 457**
**D-4150 Krefeld 1(DE)**

(72) Erfinder: **Ahrweiler, Karl-Heinz**
**Büdericher Strasse 87**
**D-4156 Willich 1(DE)**
Erfinder: **Funger, Bernhard**
**Am Viefershof 22**
**D-4150 Krefeld 29(DE)**

(74) Vertreter: **Palgen, Peter, Dipl.-Phys. Dr.**
**Mulvanystrasse 2**
**D-4000 Düsseldorf(DE)**

(54) **Walze.**

(57) Die Endquerdichtung (20) dient zur Abdichtung einer Längskammer (12) zwischen dem Querhaupt (1) einer hydraulisch innenabgestützten Walze und der um dieses umlaufenden Hohlwalze (3). Die Endquerdichtung (20) umfaßt einen Lagerring (21) eines Wälzlagers (40), auf welchem sich von der anderen, auf der Seite der Längskammer (12) gelegenen Seite ein Lagerring (31) abstützt, der mit einem am Querhaupt (1) festen Ring (29) einen Spalt (30) von weniger als 0,1 mm Breite bildet. Der Lagerring (31) ist gegenüber dem Innenumfang (4) der Hohlwalze (3) abgedichtet und dreht sich mit. Beide den Spalt (30) begrenzende Spaltflächen (27,28) befinden sich an Teilen, die am Querhaupt (1) festgelegt sind.

FIG. 2

# Walze

Die Erfindung bezieht sich auf eine Walze der dem Oberbegriff des Anspruchs 1 entsprechenden Art.

Eine derartige Walze ist aus der DE-PS 31 28 140 bekannt. Bei der bekannten Ausführungsform ist die Hohlwalze durch an den Enden angebrachte Wälzlager auf dem Querhaupt gelagert. Innerhalb der Wälzlager ist mit der Hohlwalze ein mitdrehender Ring fest verbunden, der gleichzeitig die eine Spaltfläche der Spaltdichtung und den einen Lagerring des weiteren Wälzlagers bildet, dessen anderer Lagerring die andere Spaltfläche trägt, die der ersten Spaltfläche parallel ist und dieser mit einem geringen Abstand von unter 0,1 mm, im allgemeinen im Bereich von 0,02 mm gegenübersteht. Der Lagerring dreht sich nicht mit und ist gegenüber dem Querhaupt abgedichtet, jedoch in dem erforderlichen geringen Maß verlagerbar. Die Andrükkung in Achsrichtung erfolgt durch über den Umfang verteilte Druckfedern, die sich an einem Absatz des Querhauptes abstützen.

Walzen der in Rede stehenden Art sind im allgemeinen als gelagerte sogenannte Schwimmende Walzen ausgebildet, d.h. zwischen den Endquerdichtungen erstrecken sich zu beiden Seiten des Querhauptes Längsdichtungen, die mit den Endquerdichtungen zusammen eine etwa halbzylinderschalenförmige Längskammer abdichten, die mit Druckflüssigkeit füllbar ist. Es kommen aber auch Ausführungsformen in Betracht, bei denen die Kraftübertragung von dem Querhaupt auf den Innenumfang der Hohlwalze durch einzelne über die Länge der Hohlwalze verteilte hydrostatische Stützelemente vorgenommen ist. Auch hierbei füllt sich der zwischen dem Querhaupt und dem Innenumfang der Hohlwalze verbleibende Zwischenraum mit Druckflüssigkeit, gegen deren Austritt eine Dichtung vorgesehen sein muß. Obwohl ferner die Erfindung in erster Linie für gelagerte Hohlwalzen in Betracht kommt, sind auch Ausführungsformen nicht ausgeschlossen, bei denen die Walze einen sogenannten "inneren Hub" ausführen kann, wie es aus der DE-AS 22 54 392 bekannt ist.

Ausgangspunkt der Erfindung sind Probleme gewesen, die auftraten, wenn bei einer gelagerten Schwimmenden Walze der bekannten Art besonders hohe Liniendrücke bei hohen Temperaturen der in der Längskammer befindlichen Druckflüssigkeit gefahren werden mußten. Hierbei treten starke Durchbiegungen des Querhaupts und somit starke Winkeländerungen des Querhaupts gegenüber dem Innenumfang der Hohlwalze im Bereich der Endquerdichtungen und außerdem besonders starke axiale Verlagerungen der Hohlwalze gegenüber dem Querhaupt im bereich der Endquerdichtungen auf, weil die Hohlwalze gegenüber dem Querhaupt Temperaturunterschiede größeren Ausmaßes aufweisen kann. Weil die eine Spaltfläche bei der bekannten Ausführungsform an der Hohlwalze angeordnet ist, muß die Endquerdichtung sowohl die erheblichen axialen Verlagerungsstrecken als auch die starken Winkeländerungen mitmachen. Dies führt zu Problemen mit einseitiger Beanspruchung der Wälzelemente des die Spaltflächen auf Abstand haltenden Wälzlagers und zu Verschleißproblemen an der den einen Lagerring des Wälzlagers gegen das Querhaupt abdichtenden Dichtung.

Der Erfindung liegt die Aufgabe zugrunde, eine gattungsgemäße Lageranordnung so auszugestalten, daß sie von starken Verlagerungen im Bereich der Endquerdichtungen weniger betroffen ist.

Diese Aufgabe wird durch die in Anspruch 1 wiedergegebene Erfindung gelöst.

Der wesentliche Punkt ist, daß die Spaltflächen im Gegensatz zum Stand der Technik nunmehr beide am Querhaupt abgestützt sind, so daß das Wälzlager von den Verlagerungen der Achsen des Querhauptes und der Hohlwalze bzw. von Fluchtfehlern derselben nicht mehr betroffen ist. Beide Spaltflächen sind vielmehr auf einem der Länge der Endquerdichtung entsprechenden Abschnitt mit dem Querhaupt verbunden und erfahren dementsprechend kaum noch Änderungen ihrer Winkelstellung zueinander, die über das Wälzlager weitergegeben werden müßten.

Ein wichtiger Vorteil ist, daß durch die Festlegung beider Spaltflächen am Querhaupt die Spaltbreite auf einfache Weise einstellbar gemacht werden kann (Anspruch 2), zum Beispiel mittels eines am Querhaupt vorgesehenen Gewinderinges (Anspruch 3).

Eine wichtige Ausgestaltung ist Gegenstand des Anspruchs 4: durch diese Anordnung erfährt der die eine Spaltfläche tragende Lagerring einen Druck axial nach außen, ohne daß es der Vorsehung von Federn zur Erzielung der Anlage im Wälzlager bedarf.

Es empfiehlt sich, aus fertigungstechnischen Gründen beide Lagerringe gemäß Anspruch 5 zweiteilig herzustellen. Dadurch können die besonders gehärteten Laufringe einerseits sowie der Stützring und der Gewindering andererseits separat gefertigt werden.

Bei der in Anspruch 4 angegebenen Anordnung der Spaltdichtung kann der Gedanke des Anspruchs 5 gemäß Anspruch 6 verwirklicht werden.

Bei der aus der DE-PS 31 28 140 bekannten Ausführungsform trugen die beiden Lagerringe zugleich die Spaltflächen. Bei der Erfindung ist eine Spaltfläche von den Lagerringen getrennt. Sie kann aus Fertigungsgründen gemäß Anspruch 7 an einem am Querhaupt festen Ring gebildet sein.

Um den einen Lagerring am Innenumfang der Hohlwalze abzudichten, empfiehlt sich die Vorsehung eines begrenzt beweglichen Dichtrings in einer Spiel aufweisenden Nut des Lagerrings. Der Dichtring kann sich in der Nut verlagern, während er an seinem am Innenumfang der Hohlwalze anliegenden Außenumfang gegenüber der Hohlwalze stehenbleibt bzw. nur geringere ·Verlagerungen ausführt. Dies ist für den Verschleiß der Hohlwalze im Bereich des Dichtrings wichtig. Wenn der Dichtring bei stark durchgebogener Hohlwalze zu arbeiten hätte und sich nur gegenüber der Hohlwalze verlagern könnte, müßte eine solche Verlagerung bei jeder Umdrehung der Hohlwalze stattfinden, was zu einer hohen Reibbeanspruchung führt, auch wenn die Verlagerungswege nur gering sein mögen.

In der Zeichnung ist ein Ausführungsbeispiel der Erfindung dargestellt.

Fig. 1 zeigt eine Walzenanordnung mit einer erfindungsgemäßen Walze, teilweise im Längsschnitt;

Fig. 2 zeigt eine Teilansicht des Dichtungsbereichs aus Fig. 1 in vergrößertem Maßstab;

Fig. 3 zeigt eine Teilansicht des Dichtringbereichs aus Fig. 2 in erneut vergrößertem Maßstab.

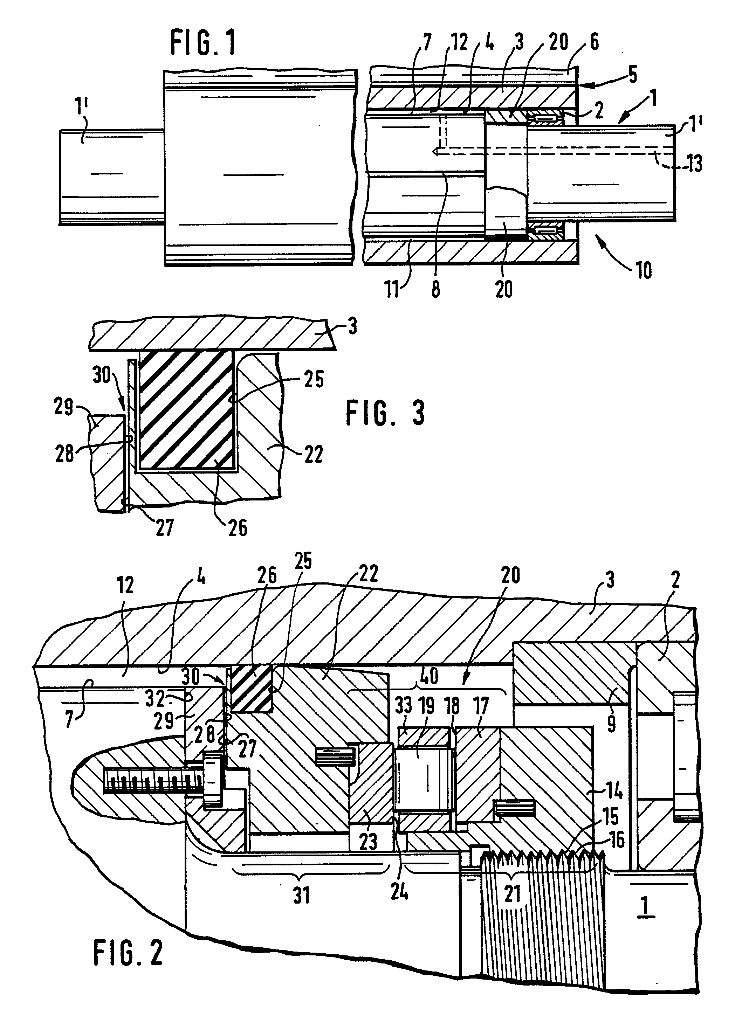

Die in Fig. 1 als Ganzes mit 10 bezeichnete Walze umfaßt ein feststehendes Querhaupt 1 und eine um dieses umlaufende Hohlwalze 3, deren Innenumfang 4 allseitigen Abstand vom Außenumfang 7 des Querhauptes 1 beläßt und die auf in der Nähe der Enden angebrachten Traglagern 2 auf dem Querhaupt 1 abgestützt ist. Die Enden 1' des Querhauptes 1 stehen aus der Hohlwalze 3 vor und bilden die Walzenzapfen, an denen Kräfte auf die Walze 10 aufgebracht werden können bzw. an denen sie in einem nicht dargestellten Walzenständer gelagert werden kann. Eine Gegenwalze 6 liegt in dem gezeigten Ausführungsbeispiel von oben an der Walze 10 an und bildet an deren Oberseite den Walzspalt 5.

Der zwischen dem Innenumfang 4 der Hohlwalze 3 und dem Querhaupt 1 zwischen den Traglagern 2 gebildete Zwischenraum ist durch zu beiden Seiten des Querhauptes 1 etwa in dessen halber Höhe, also an der breitesten Stelle, angebrachte Längsdichtungen 8, die am Innenumfang 4 der Hohlwalze 3 anliegen, sowie innenseitig der Traglager 2 diesen benachbart angeordnete Endquerdichtungen 20 in eine auf der Seite des Walzspalts 5 gelegene Längskammer 12 sowie eine dem Walzspalt 5 abgelegene Kammer 11 unterteilt. In die Längskammer 12 führt eine Zuleitung 13, mittels deren Druckflüssigkeit in die Längskammer 12 eingeleitet werden kann. Diese Druckflüssigkeit stützt sich einerseits gegen den Innenumfang der Hohlwalze 3, andererseits gegen die dieser zugewandte Oberfläche 7 des Querhauptes 1 ab. Das Querhaupt 1 kann sich durch den allseits vorhandenen Abstand zum Innenumfang der Hohlwalze unter der Wirkung des zur Bildung des Liniendrucks benötigten Drucks in der Längskammer 12 durchbiegen, ohne daß die Hohlwalze 3 mit ihrem Innenumfang 4 an dem Querhaupt 1 zur Anlage kommt. Auch kann, da die Hohlwalze 3 über die Traglager 2 auf dem Querhaupt 1 abgestützt ist, eine bewußte Durchbiegung der Hohlwalze 3 herbeigeführt werden. Die Druckflüssigkeit kann beheizt sein, wodurch die Hohlwalze eine für die Behandlung einer Warenbahn in manchen Fällen benötigte erhöhte Temperatur erhält.

An den Längsdichtungen 8 tritt beim Umlauf der Hohlwalze 3 immer etwas Leckflüssigkeit in die untere Kammer 11 über, so daß diese sich nach und nach mit Druckflüssigkeit füllt. Auch kann es in bestimmten Fällen erwünscht sein, auch diese Kammer 11 bewußt mit Druckflüssigkeit unter einem zu dem Druck in der Längskammer 12 in einem bestimmten Verhältnis stehenden anderen Druck zu füllen. Die hierfür vorgesehenen Leitungen sind ebenso wie die Ableitungen aus der Längskammer 12 aus Gründen der Übersichtlichkeit nicht dargestellt.

Die Endquerdichtung 20 ist in Fig. 2 im einzelnen dargestellt. Das die Hohlwalze 3 auf dem Querhaupt 1 abstützende Traglager liegt in Achsrichtung an einem Distanzring 9 an, der mit der Hohlwalze 3 umläuft. Auf der gleichen Seite ist auf dem Querhaupt 1 ein Lagerring 21 angeordnet, der aus einem Gewindering 14 mit einem Innengewinde 15, welches auf ein Außengewinde 16 des Querhauptes 1 aufgeschraubt ist, sowie einem auf der dem Traglager 2 abgewandten Seite vorgesehenen Laufring 17 besteht, der zu einem als Ganzes mit 40 bezeichneten Wälzlager gehört und eine zur Achse des Querhauptes senkrechte ebene Lauffläche 18 für über den Umfang verteilte zylindrische, in einem Käfig 33 gehaltene Wälzrollen bildet. Auf der gegenüberliegenden Seite steht dem Laufring 17 ein Laufring 23 mit einer zur Achse des Querhauptes 1 senkrechten ebenen Lauffläche 24 gegenüber, der mit einem Stützring 22 verbunden ist und mit diesem zusammen den Lagerring 31 bildet. Der Stützring 22 erstreckt sich in radialer Richtung bis fast zum Innenumfang 4 der Hohlwalze 3 und weist an dem dem Traglager 2 abgewandten, d.h. in Fig. 2 linken Ende eine Umfangsnut 25 auf, in der ein Dichtring 26· angeordnet ist, der nach Art eines Kolbenrings ausgebildet ist und unter Spannung an dem Innenumfang 4 anliegt und außerdem mit Spiel in der Umfangsnut 25 sitzt, so daß er sich etwas verkanten und verlagern kann. Da sich der Stützring 22 und der Dichtring 26 mit der Hohlwalze 3 mitdrehen und keine Verlagerung in Umfangsrichtung zwischen dem Dichtring 26 und dem Innenumfang 4 der Hohlwalze 3 stattfindet, kann er durch das Spiel auch bei geringen axialen Verlagerungen oder Verkantungen der Dichtring 26 seine Lage gegenüber der Hohlwalze 3 beibehalten und finden die bei der Mitnahme des Dichtrings 26 durch die Hohlwalze 3 sich ergebenden Verlagerungen innerhalb der Umfangsnut 25 statt. Dadurch ergibt sich eine Verminderung des Reibverschleißes am Innenumfang 4 der Hohlwalze 3. Die axiale, gemäß Fig. 2 nach links weisende Stirnseite des Stützrings 22 bildet eine ebene, zur Achse des Querhauptes 1 senkrechte Spaltfläche 27. Gegen eine radiale Schulter 32 des Querhauptes 1 liegt ein mit dem Querhaupt 1 verbundener Ring 29 an, der auf der gemäß Fig. 2 rechten, also der Spaltfläche 27 zugewandten Seite eine ebene, zur Achse des Querhauptes 1 senkrechte Spaltfläche 28 bildet, die der Spaltfläche 27 in geringem Abstand gegenübersteht und mit dieser einen Spalt 30 bildet, der einen so großen Strömungswiderstand bildet, daß er praktisch als Abdichtung für die in der Längskammer befindliche, unter hohem Druck stehende Druckflüssigkeit wirkt, obwohl der umlaufende Stützring 22 und der undrehbare Ring 29 einander nicht berühren.

Die Breite des Spaltes 30 beträgt weniger als 0,1 mm und liegt bei höheren Drücken in der Längskammer 12 im Bereich von 0,02 mm. Die Größe des Spaltes 30 kann durch Verdrehung des Gewinderings 14 justiert werden. An das Wälzlager 40, welches ja einen dem Durchmesser des Querhaupts 1 entsprechenden recht großen Durchmesser aufweist, werden angesichts der geringen Größe des Spaltes 30 erhebliche Anforderungen gestellt.

Die in die Längskammer eingeleitete Druckflüssigkeit wirkt in axialer Richtung gegen den dem Innenumfang 4 der Hohlwalze 3 benachbarten Randbereich des Stützrings 22 und außerdem in dem Spalt 30 gegen die Spaltfläche 27 und drückt den Stützring 22 gemäß Fig. 2 nach rechts gegen die zylindrischen Wälzrollen 19, so daß es keiner Federn bedarf, um die Teile der Endquerdichtung 20 in gegenseitiger Anlage zu halten.

Statt das Wälzlager 40 mit zylindrischen Wälzrollen 19 auszurüsten, können auch andere Typen von Wälzlagern vorgesehen sein.

## Ansprüche

1. Walze mit einer den arbeitenden Walzenumfang bildenden umlaufenden Hohlwalze und einem diese der Länge nach durchgreifenden, ringsum Abstand zum Innenumfang der Hohlwalze belassenden undrehbaren Querhaupt, auf welches aus den aus der Hohlwalze hervorstehenden Enden äußere Kräfte aufbringbar sind, an welchem sich die Hohlwalze über eine Druckflüssigkeit abstützt und an welchem an den längs des Querhaupts und der Hohlwalze einander gegenüberliegenden Enden des Zwischenraums zwischen der Hohlwalze und dem Querhaupt als Spaltdichtungen ausgebildete Endquerdichtungen vorgesehen sind, deren Spaltflächen eben sind, sich radial erstrecken und unabhängig von Durchbiegungen des Querhaupts oder der Hohlwalze durch ein eigenes Wälzlager auf Abstand haltbar sind, dessen einer Lagerring die eine Spaltfläche trägt, dadurch gekennzeichnet, daß beide Spaltflächen (27,28) in Achsrichtung am Querhaupt (1) abgestützt sind und der eine Lagerring (31) mit der Hohlwalze (3) umläuft und dieser gegenüber abgedichtet und geringfügig verlagerbar ist.

2. Walze nach Anspruch 1, dadurch gekennzeichnet, daß die Spaltbreite einstellbar ist.

3. Walze nach Anspruch 2, dadurch gekennzeichnet, daß die Einstellung mittels eines das Querhaupt (1) umgebenden Gewinderinges (14) erfolgt.

4. Walze nach einem der Ansprüche 1 bis 3, dadurch gekennzeichnet, daß der Spalt (30) auf der Seite des Inneren der Hohlwalze (3) und das Wälzlager (40) axial außerhalb des Spalts (30) angeordnet sind.

5. Walze nach einem der Ansprüche 1 bis 4, dadurch gekennzeichnet, daß der eine Lagerring (21) den Gewindering (14) und den einen Laufring (17) des Wälzlagers (40), der andere Lagerring (31) einen Stützring (22) und den anderen Laufring (23) des Wälzlagers (40) umfaßt.

6. Walze nach Anspruch 4 und 5, dadurch gekennzeichnet, daß der Gewindering (14) an dem dem Spalt (30) abgewandten Laufring (17) des Wälzlagers (40) angreift.

7. Walze nach Anspruch 6, dadurch gekennzeichnet, daß die andere Spaltfläche (28) an einem am Querhaupt (1) festen Ring (29) ausgebildet ist.

8. Walze nach einem der Ansprüche 1 bis 7, dadurch gekennzeichnet, daß der mit der Hohlwalze (3) umlaufende Lagerring (31) am Außenumfang eine Umfangsnut (25) aufweist, in der mit Spiel ein am Innenumfang (4) der Hohlwalze (3) dichtend anliegender kolbenringartiger Dichtungsring (26) angeordnet ist.

FIG. 1

FIG. 3

FIG. 2